**Europäisches Patentamt**

(19) **European Patent Office**

**Office européen des brevets**

(11) Veröffentlichungsnummer: **0 193 589
B1**

(12) ## EUROPÄISCHE PATENTSCHRIFT

(45) Veröffentlichungstag der Patentschrift:
**12.04.89**

(21) Anmeldenummer: **85904614.6**

(22) Anmeldetag: **03.09.85**

(86) Internationale Anmeldenummer:
**PCT/EP 85/00441**

(87) Internationale Veröffentlichungsnummer:
**WO 86/01441 (13.03.86 Gazette 86/6)**

(51) Int. Cl.⁴: **B 21 D 17/00, F 16 L 33/20**

(54) **Vorrichtung und Verfahren zum Herstellen einer Schlauchpresshülse.**

(30) Priorität: **04.09.84 DE 3432443**

(43) Veröffentlichungstag der Anmeldung:
**10.09.86 Patentblatt 86/37**

(45) Bekanntmachung des Hinweises auf die Patenterteilung:
**12.04.89 Patentblatt 89/15**

(84) Benannte Vertragsstaaten:
**AT BE CH DE FR GB IT LI LU NL SE**

(56) Entgegenhaltungen:
**EP-A- 0 131 159
CH-A- 141 930
DE-A- 2 532 624
DE-B- 1 272 866
FR-A- 2 332 476
GB-A- 530 368
GB-A- 2 092 919
US-A- 1 651 231
US-A- 3 371 408
US-A- 3 479 713**

(73) Patentinhaber: **DIETZEL, Klaus, Herdekamp 8,
D-4232 Xanetn (DE)**

(72) Erfinder: **DIETZEL, Klaus, Herdekamp 8, D-4232 Xanetn
(DE)**

(74) Vertreter: **Schumacher, Horst, Dr. Dipl.-Phys.,
Frühlingstrasse 43 (Ecke Holunderweg),
D-4300 Essen 1 (DE)**

## Beschreibung

Die Erfindung betrifft ein Verfahren zum Herstellen einer Schlauchpreßhülse gemäß dem Oberbegriff von Anspruch 1, sowie eine Vorrichtung zum Herstellen solcher Schlauchpreßhülsen gemäß dem Oberbegriff von Anspruch 7 oder Anspruch 9, wie aus der GB-A-2092919 bekannt.

Derartige Schlauchpreßhülsen werden zum Herstellen von Schlauchverbindungen im Hochdruckbereich benötigt, bei denen ein eine Schlauchkupplung bildender Schlauchnippel in das Innere des Schlauchendes gesteckt und die Schlauchpreßhülse auf das Äußere des Schlauchendes gepreßt und in der Regel mit dem Schlauchende verzahnt wird.

Für im Niederdruckbereich angewendete Schläuche reicht es aus, die Schlauchpreßhülsen aus formgepreßtem Blech herzustellen, da von außen in die Hülse eingeprägte Sicken an der Hülseninnenwand für eine ausreichende Verzahnung mit dem Schlauchende genügen. Für die Hochdruckanwendung hingegen werden Schlauchpreßhülsen aus dem Vollen gedreht, wobei das Herstellen der zumeist das Hülseninnere ununterbrochen umlaufenden Zahnkränze relativ aufwendig ist, da hierzu Drehstähle mit einer Vielzahl von Schneiden verwendet werden müssen. Hinterschneidungen zur Bildung spitzer Zähne, insbesondere das Herstellen unterbrochener Zahnringe, sind so gut wie überhaupt nicht möglich, da dies nicht nur eine radiale, sondern auch eine axiale Bewegung des Drehstahles erfordert. In keinem Fall ist bisher eine Kaltverformung dickwandiger Metallhülsen gelungen, so daß wegen des Schneidens aus dem Vollen etwa dreimal soviel Rohmaterial benötigt wird, wie es dem Hülsenendgewicht entspricht.

Aus der EP-A 0 131 159, die unter Artikel 54(3) EPÜ fällt und damit für die Frage der erfinderischen Tätigkeit nicht von Bedeutung ist, ist eine Vorrichtung zum Herstellen von umlaufenden Versteifungsrippen in dünnwandigen Blechdosen bekannt. Zu diesem Zweck sind formgleiche äußere und innere radial verfahrbare Preßwerkzeuge vorgesehen. Die daurch entstehende Rillung im Doseninneren weist eine zahnähnliche Vorzugsrichtung zu einem Stirnende hin nicht auf. Für Schlauchpreßhülsen, insbesondere für solche mit relativ dickwandigem Material, ist diese bekannte Vorrichtung schon aus diesem Grunde nicht geeignet.

Aus der GB-A-2 092 919 ist es bekannt, Schlauchpreßhülsen dadurch herzustellen, daß ein Rohrabschnitt von einem Ende her konisch aufgeweitet wird, wobei der Innenkonus mehrere umlaufende Ringschultern mit unterschiedlichen Durchmessergrößen erhält, während der Rohrabschnitt von außen völlig glatt bleibt. Beim Verbinden eines Schlauchendes mit einem Schlauchnippel wird der konisch erweiterte Rohrabschnitt von seinem erweiterten Ende her über das Schlauchende geschoben; anschließend wird der Rohrabschnitt durch Pressen von außen in eine mehr oder weniger zylindrische Außenform zurückgepreßt. Die zuvor hergestellten Ringschultern graben sich dann als Zahnkränze in die äußere Oberfläche des Schlauchendes ein. Diese bekannten Schlauchpreßhülsen haben den Nachteil, daß die Zähne vom Schlauchende her gesehen nur zum Schlauch selbst hinweisen können, nicht aber in die entgegengesetzte Richtung, also zum freien Ende des Schlauches hin. Außerdem muß der zur Schlauchpreßhülse zu verformende Rohrabschnitt relativ stark aufgeweitet werden. Die Wirksamkeit derart hergestellter Zahnkränze und Schlauchpreßhülsen ist für viele Anwendungszwecke nicht geeignet.

Der Erfindung liegt daher die Aufgabe zugrunde, insbesondere für den Hochdruckbetrieb, eine Schlauchpreßhülse der eingangs genannten Art aus insbsondere dünnwandigen, Rohrabschnitten – nachfolgend kurz als «Hülsen» genannt – zu schaffen und sie durch Kaltverformen herzustellen. Diese Aufgabe wird hinsichtlich eines Herstellungsverfahrens erfindungsgemäß durch die kennzeichnenden Merkmale des Anspruches 1 gelöst.

Als dünnwandig werden Rohrhülsen einer Wandstärke ab etwa 1,5 mm betrachtet, wobei die minimalen Wandstärken mit zunehmendem Hülsendurchmesser zunehmen. Es versteht sich, daß solche Hülsen für alle Anwendungszwecke, bei denen eine innenverzahnte Hülse auf einen anderen Gegenstand aufgewalzt oder gepreßt wird, geeignet sind; sie eignen sich sowohl für Zähne mit stumpfen, rechten und spitzen Winkeln an den Zahnspitzen. Ein die Hülseninnenwand umlaufender Kranz solcher Zähne kann sowohl einen ununterbrochenen Wulst wie auch auf einem Umfang angeordnete Einzelzähne darstellen. Die Hülsen haben bevorzugt zylindrischen, können aber auch jeden anderen beliebigen Querschnitt aufweisen.

Das erfindungsgemäße Herstellungsverfahren gestattet es erstmals, Schlauchpreßhülsen durch Kaltverformen gängiger Stähle, aber auch von Edelstählen, ohne Materialverlust und äußerst rationell herzustellen und Hinterschneidungen beliebiger Gestalt in Anpassung an den jeweiligen Verwendzungszweck zu realisieren. Bevorzugt preßt beim Herstellen der Schlauchpreßhülsen ein Preßwerk die durchgehende oder unterbrochene Sicke und der Stempel formt nachfolgend mittels einer (formgebenden) Schulter unter axialem Vorschub den Zahn oder die Zähne, schließlich gibt das Preßwerkzeug die Hülse frei und der Stempel und das Preßwerk verfahren in eine benachbarte Arbeitsposition, um dort in derselben Abfolge wie zuvor beschrieben einen weiteren Kranz von Zähnen an derselben Hülse herzustellen; die Anzahl der für eine Hülse erforderlichen Kränze hängt vom Einzelfall ab. Der Endbereich des Stempels besitzt bevorzugt einen geringeren als den ursprünglichen Innendurchmesser der Hülse und begrenzt damit den Materialfluß beim Pressen der Sicke; das Preßwerkzeug stellt seinerseits ein äußeres Widerlager beim nachfolgenden Formen der Zähne durch die formgebende Schulter dar. Hierbei wird das vom Sickenpressen her einen Kranz mindestens einer inneren Erhebung bildende Material stempelseitig in die gewünschte Kontur verformt. Der Stempel besitzt hierzu im Anschluß an sein erwähntes dünneres Ende eine formgebende Schulter, die bevorzugt einen der gewünschten Zahnform entsprechenden Hinterschnitt aufweist. Die dem Stempel abgewandte Zahnseite behält also im wesentlichen die durch das Sickenpressen verursachte Form bei. Bei Sikken, die die Hülse nicht ununterbrochen umlaufen, können also auch auf einem Umfang liegende Einzelzähne von (in der Umfangsrichtung der Sikke) vorgebbarer Breite hergestellt werden. Der Stempel weist im Anschluß an den größten Durchmesser der formgebenden Kontur einen unveränderten Querschnitt auf, um möglichst günstige Kräfteverhältnisse an der formgebenden Schulter zu gewährleisten.

Das Sickenpreßwerkzeug kann auch aus einem Druckbalken mit einer Sickenpreßkante und mindestens zwei Stützrollen sowie dem Stempel bestehen; dabei drückt die Sickenpreßkante unter axialem Fortschreiten eine die Hülse ununterbrochen umlaufende Sicke.

Nach dem Formen des ersten Kranzes von Zähnen kann der Stempel um einen vorbestimmten Betrag zurückgezogen und ein weiterer preß- und Verformungsschritt angeschlossen werden, so daß praktisch beliebig viele, axial beabstandete Kränze von Zähnen entstehen. Bevorzugt werden mehrere Schlauchpreßhülsen in einer einzigen Maschine gleichzeitig hergestellt, indem an mehreren Hülsen in nebeneinander angeordneten Werkzeugen gleichzeitig in jeweils einer anderen axialen Position Zähne hergestellt werden und die Hülsen nachfolgend dem jeweils benachbarten Werkzeug zum Herstellen des nächsten Kranzes von Zähnen zugeführt werden. Hierbei werden der Zahl der beabstandeten Kränze entsprechend viele mehrteilige Sickenpreßwerkzeuge benötigt, während die Stempel in einem gemeinsamen Joch zusammengefaßt gemeinsam durch einen einzigen Hauptstempel betätigbar sind.

Nach dem Stand der Technik erhalten die Hülsen an dem Ende, zu dem die Zähne hinweisen, eine im rechten Winkel von der Hülsenwandung nach innen gerichtete Ringschulter, um mit entsprechenden Nuten in den Schlauchnippeln während des Preßvorganges am Schlauchende verzahnt zu werden. Dieser Arbeitsschritt erfordert ein genaues Positionieren des Schlauchnippels und der Schlauchhülse, da die Verzahnung sonst nicht exakt greift, so daß der Schlauch aufgrund einer mangelhaften Schlauchverbindung unbrauchbar wird. Dieser Nachteil wird dadurch beseitigt, daß bei einer erfindungsgemäß hergestellten Schlauchpreßhülse abschließend ein Hülsenende zu einer nach innen gerichteten Ringschulter verpreßt wird, die bevorzugt bis zu einem Winkel von etwa 25° zum Hülseninnenraum hin einwärts geneigt ist.

Dieses Verpressen bewirkt – anders als bei dem üblichen Drehen einer solchen Ringschulter –, daß das innere Hülsenmaterial stärker als das äußere nach innen fließt, so daß sich der lichte, von der Ringschulter gebildete Querschnitt vom freien Ende nach innen hin verjüngt. Die Ringschulter bildet also eine nach innen gerichtete Schneide, die beim Aufpressen auf das Schlauchende auch bei nicht ganz exakter Positionierung des Schlauchnippels mit hoher Sicherheit auf die Ringnut des Schlauchnippels trifft und somit eine Führung für das nachfließende Material bildet; durch die Einwärtsneigung der Schulter wird verhindert, daß sie sich beim Aufpressen auf den Schlauchnippel axial nach außen bewegt. Auf diese Weise wird nicht nur die Ringschulter sehr einfach herstellbar, sondern auch die abschließende Montage der Schlauchpreßhülse sicherer und der Ausschuß aufgrund ungenauer Positionierung von Schlauchnippel und Schlauchpreßhülse erheblich verringert.

Die der Erfindung zugrundeliegende Aufgabe wird hinsichtlich einer Vorrichtung zum Durchführen des vorgeschriebenen Verfahrens durch die kennzeichnenden Merkmale der Ansprüche 7 oder 9 gelöst; vorteilhafte Weiterbildungen dieser Lösungen ergeben sich aus den Unteransprüchen. Der Querschnitt des Lagerschildes des Preßwerkzeuges entspricht dem gewünschten Außenquerschnitt der Schlauchpreßhülse, d.h. in der Regel demjenigen Querschnitt, den sie im Rohzustand besitzt. Das Lagerschild verhindet beim Formen der Zähne durch den Stempel ein nach Außenfließen des Materials, so daß die gewünschten Materialstärken mit nur geringen Toleranzabweichungen eingehalten werden; eine entsprechende Funktion haben die alternativ verwendbaren Stützrollen.

Gemäß Anspruch 14 weist die Kontur der formgebenden Schulter einen spitzwinkligen Hinterschnitt auf, so daß die Zähne der Schlauchpreßhülse eine ebene Flanke mit einem spitzen Winkel im Bereich des geringsten inneren Hülsenquerschnittes haben; damit hergestellte Schlauchpreßhülsen eignen sich vor allem für Schläuche mit Drahtgewebeeinlage, bei denen die äußere Gummierung etwa bis auf die Drahteinlage vor dem Aufschieben der Schlauchpreßhülse entfernt wird, so daß die Zähne in die Drahteinlage nach dem Preßvorgang eingreifen. Es besteht aber auch die Möglichkeit, durch bestimmte Zahnformen ohne Entfernung der äußeren Gummierung eine Verpressung durchzuführen.

Für Schläuche mit Gewebeeinlage empfiehlt sich hingegen eine Kontur der formgebenden Schulter mit einem, einen runden Querschnitt bildenden Hinterschnitt. Auf diese Weise sind die Spitzen der Zähne abgerundet und vermeiden ein Durchtrennen des Gewebes, bieten aber aufgrund des Hinterschnittes gleichwohl eine vorzügliche Verzahnung mit dem Gewebe.

Ein axial verfahrbarer zweiter Stempel mit einer formgebenden Innenkontur zum Herstellen der nach innen gerichteten Ringschulter an einem Hülsenende gestattet ein schnelles sowie einfaches Verformen, wobei den realtiv großen Hülsenwandstärken durch hinreichend große Biegeradien Rechnung getragen wird und ein ggf. im Zentrum der Innenkontur vorgesehener, axialer konzentrischer Vorsprung verhindert, daß das Hülsenmaterial beim Formen der Ringschulter zu weit nach innen fließt.

Alternativ zu dem zuvor beschriebenen Herstellungsverfahren für eine nach innen gerichtete Ringschulter an einem Hülsenende mit entsprechenden Werkzeugen ist es (gemäß Anspruch 5) auch möglich, abschließend in ein Hülsenende einen Ring einzupressen, der z.B. die Form einer Unterlegscheibe aufweisen und z.B. aus Kupfer hergestellt sein kann, welcher bevorzugt nach dem Einpressen mit dem Hülsenende verlötet wird. Es hat sich gezeigt, daß die Ausreißfestigkeit dieses Ringes einer aus dem Vollen gedrehten Ringschulter entspricht.

Als besonders vorteilhaft hat sich jedoch eine andere Alternative (gemäß Ansprüchen 6 und 13) erwiesen, wonach das vom Schlauchende abgewandte Hülsenende eine z.B. konische Verjüngung mit einem zylindrischen Hülsenendbereich erhält, dessen Innendurchmesser dem Außendurchmesser des Schlauchnippels so entspricht, daß beide Teile übereinander geschoben bzw. gepreßt werden können und nachfolgend an ihren radialen, umlaufenden Berührungsflächen miteinander verlötet werden können. Hierdurch entfallen das Eindrehen einer Ringnut in den Schlauchnippel bzw. äquivalente Maßnahmen zum Herstellen einer Ringnut, so daß insgesamt in erheblichem Umfang Arbeitsaufwand eingespart wird und glatte, insbesondere relativ dünnwandige, Rohre zur Schlauchnippelherstellung verwendbar sind.

Bevorzugt weisen Schlauchpreßhülsen mehrere, vorzugsweise drei, axial beabstandete, umlaufende spitzwinklig zu einem mit einer nach innen gerichteten Ringschulter versehenen Hülsenende weisende, geschlossene Zahnringe auf.

Die vorgenannten, zu verwendenden Bauteile unterliegen in ihrer Größe, Formgestaltung, Materialauswahl und technischen Konzeption keinen besonderen Ausnahmebedingungen, so daß die in dem jeweiligen Anwendungsgebiet bekannten Auswahlkriterien uneingeschränkt Anwendung finden können.

Weitere Vorteile der Erfindung ergeben sich aus der nachfolgenden Beschreibung der zugehörigen Zeichnung, in der die einzelnen Herstellungsschritte einer bevorzugten Ausführungsform einer Schlauchpreßhülse dargestellt worden sind. In der Zeichnung zeigen:

Fig. 1a–1d eine schematisch dargestellte Vorrichtung zum Herstellen einer Schlauchpreßhülse in vier aufeinanderfolgenden Arbeitsschritten – in Seitenanschnitt mit axial geschnittener Hülse (Rohrabschnitt);

Fig. 2a–2d die Vorrichtung in gleicher Darstellungsweise wie in Fig. 1a bis 1d zur Herstellung eines zweiten umlaufenden Kranzes (Ringes) von Zähnen;

Fig. 3a–3d dieselbe Vorrichtung in gleicher Darstellungsweise wie in Fig. 1a bis 1d zur Herstellung eines dritten umlaufenden Kranzes (Ringes) von Zähnen;

Fig. 4 dieselbe Vorrichtung in Draufsicht in schematisierter Darstellung;

Fig. 5a–5c die Schlauchpreßhülse gemäß Fig. 3d in einer schematisch dargestellten Vorrichtung zum Herstellen einer Ringschulter in drei Arbeitsschritten;

Fig. 6a–6c die Schlauchpreßhülse gemäß Fig. 5c in einer schematisiert dargestellten Vorrichtung zum weiteren Verformen der Ringschulter in drei Arbeitsschritten;

Fig. 7 eine Schlauchpreßhülse mit Schlauch und Schlauchnippel im Axialschnitt;

Fig. 8 eine andere Vorrichtung zum Sickenpressen mit eingelegter, radial geschnittenen, Hülse in zwei verschiedenen Arbeitspositionen in schematisierter Darstellung;

Fig. 9a–9c die Schlauchpreßhülse gemäß Fig. 3d in einer anderen, schematisch dargestellten Vorrichtung zum Herstellen eines zylindrischen Hülsenbereiches mit verringertem Innendurchmesser sowie

Fig. 10 die Schlauchpreßhülse gemäß Fig. 3d mit eingepreßtem Ring.

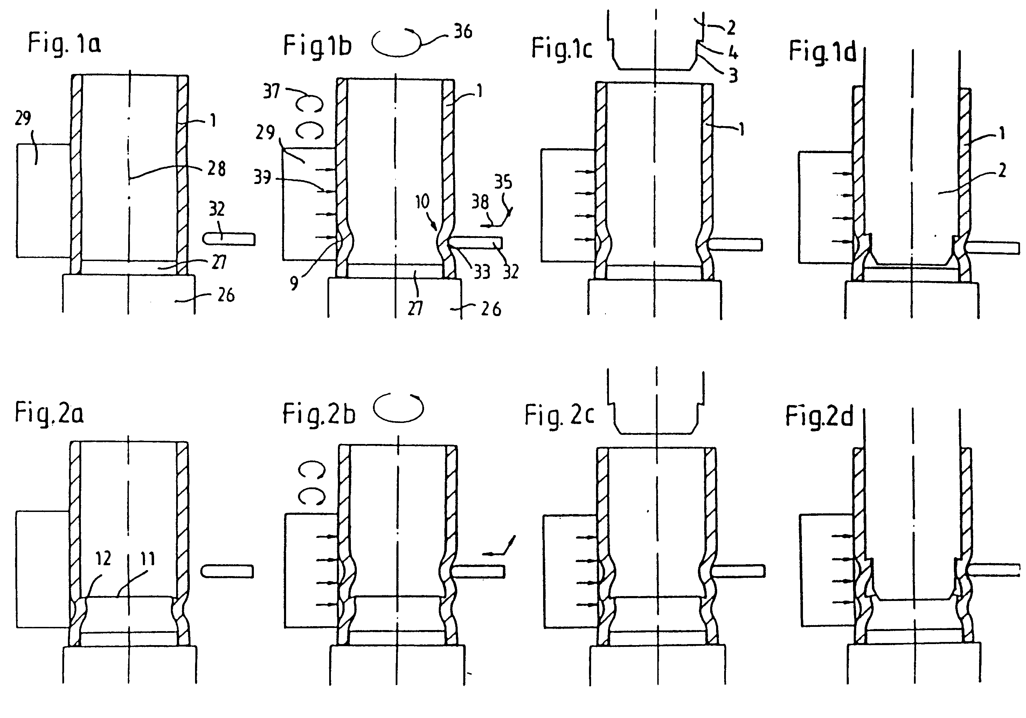

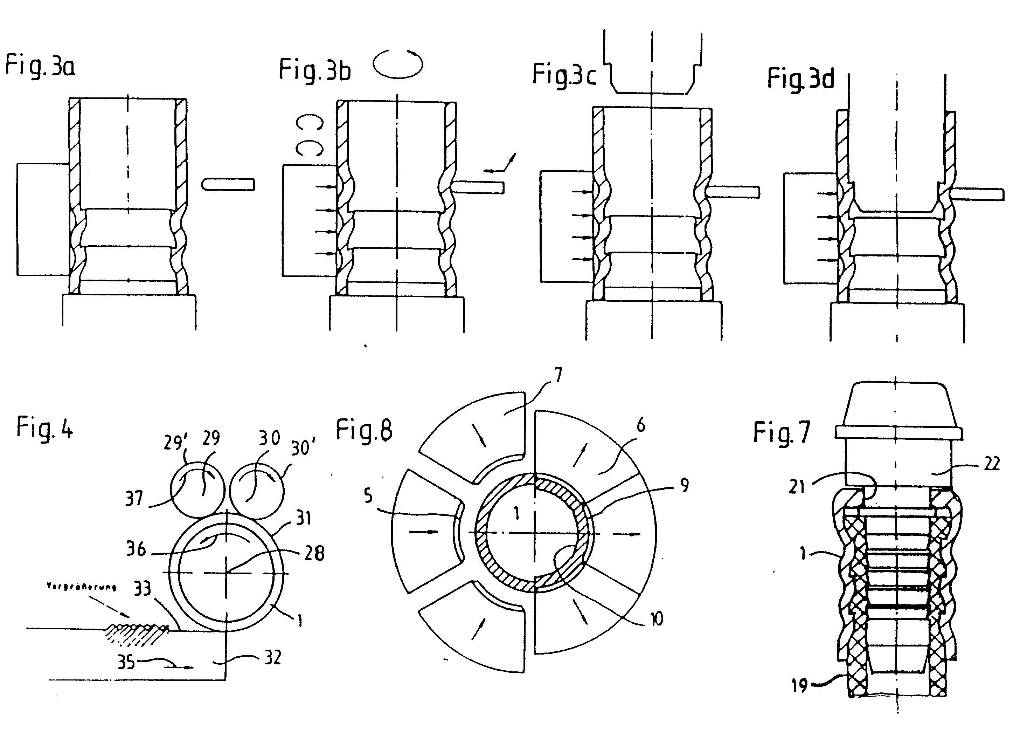

Gemäß den Fig. 1a bis 3d kann eine Schlauchpreßhülse aus einem als Hülse 1 bezeichneten Rohrabschnitt hergestellt werden – zum Beispiel einer zylindrischen Hülse aus Stahl St35 mit einer Wandstärke von etwa 2 mm und einem Durchmesser von etwa 35 mm für eine auf zum Beispiel 300 bar ausgelegte Schlaucharmatur. Der Rohling der Schlauchpreßhülse wird auf einen Arbeitstisch 26 mit einer Erhöhung 27 zum Aufnehmen der Hülse 1 aufgesetzt. Parallel zur Hülsenachse 28 erstrecken sich zwei zylindrische Stützrollen 29, 30, die (gemäß Fig. 4) um ihre Zylinderachse drehbar gelagert sind und deren Mantelflächen 29', 30' an der Hülsenoberfläche 31 kraftschlüssig anliegen. Rechtwinklig zur Hülsenachse 28 erstreckt sich ein länglicher Druckbalken 32, der in seiner Erstreckungsrichtung entlang der Hülsenperipherie verfahrbar und gegen die Hülsenoberfläche 31 radial anpreßbar ist und hülsenseitig eine Sickenpreßkante 33 aufweist. Die Sickenpreßkante 33 ist – wie ausschnittsweise in Fig. 4 vergrößert dargestellt – aufgerauht bzw. mit feinen Zähnen versehen.

Wie sich im einzelnen aus Fig. 4 ergibt, können der Druckbalken 32, die Stützrollen 29 und 30 sowie die Hülse 1 durch Reibschluß gemeinsam bewegt werden. Hierzu wird der Druckbalken 32 in Pfeilrichtung in seiner Längsrichtung verschoben. Die Rauhigkeit bzw. die Zähne der Sickenpreßkante 33 bewirkt eine Drehung der Hülse um ihre Hülsenachse 28 in Pfeilrichtung. Dabei stützt sich die Hülse 1 auf ihrer der Sickenpreßkante 33 gegenüberliegenden Außenfläche an den Stützrollen 29, 30 ab, die hierdurch in Pfeilrichtung gedreht werden. Durch den von der Sickenpreßkante 33 auf die Hülse 1 ausgeübten radialen Druck entsteht in der Hülse eine Sicke mit einer in das Hülseninnere sich erstreckende Materialerhebung 10. Durch das Verfahren des Druckbalkens 32 in Richtung seiner Längserstreckung entsteht also eine in die Hülse 1 eingerollte umlaufende und ununterbrochene Sicke 9.

Der Vorgang des Sickenrollens ergibt sich aus den Fig. 1b, 2b und 3b, wobei die Richtungspfeile 35 bis 37 den Richtungspfeilen in Fig. 4 entsprechen. Weiterhin ergibt sich aus den Fig. 1b, 2b und 3b, daß von den Stützrollen 29, 30 und dem Druckbalken 32 etwa gleich große, radial gerichtete Kräfte auf die Hülse 1 ausgeübt werden (Pfeile 38 und 39).

Die axiale Länge der Stützrollen 29 und 30 ist mindestens so groß wie der für das Sickenpressen aller in einer Hülse vorzusehenden, axial beabstandeten Sicken 9 erforderlich ist, so daß für die Herstellung jeder weiteren Sicke lediglich der Druckbalken 32 in eine neue Arbeitsposition zu verschieben ist (siehe Fig. 1a, 2a und 3a).

Beim Verfahren des Druckbalkens in seiner Erstreckungsrichtung wird die Hülse 1 mindestens einmal, bevorzugt jedoch mehrmals, vollständig um ihre Achse gedreht. Nach Abschluß dieses Einrollvorgangs der Sicke 9 bleiben die Stützrollen 39 und 30 sowie der Druckbalken 32 radial belastet (Fig. 1b, 2c und 3c). Nun fährt ein erster Stempel 2 in den Hülseninnenraum. Der Endbereich 3 des Stempels 2 ist verjüngt; sein Durchmesser entspricht dem kleinsten vorgesehenen Hülseninnendurchmesser vor dem Aufschieben der Hülse auf einen Schlauch. An dem Endbereich 3 des Stempels 2 schließt sich eine formgebende Schulter 4 an, deren Außendurchmesser etwa dem Hülseninnendurchmesser und dessen Kontur der Kontur der zu bildenden Zähne entspricht. Diese Kontur weist bevorzugt einen Hinterschnitt auf, der entsprechend der beabsichtigten Zahnform scharfkantig oder gerundet ist.

Gemäß Fig. 1d, 2d und 3d wird der Stempel 2 in der Hülse 1 so weit nach unten verfahren, bis er die Materialerhebung 10 stempelseitig zu einem umlaufenden Zahnring 11 in Form eines umlaufenden Zahnes 12 (Fig. 2a) verformt hat.

Danach wiederholt sich der Vorgang in der aus Fig. 2a bis 3d sich ergebenden Weise so oft, bis die gewünschte Anzahl an Zahnringen hergestellt ist.

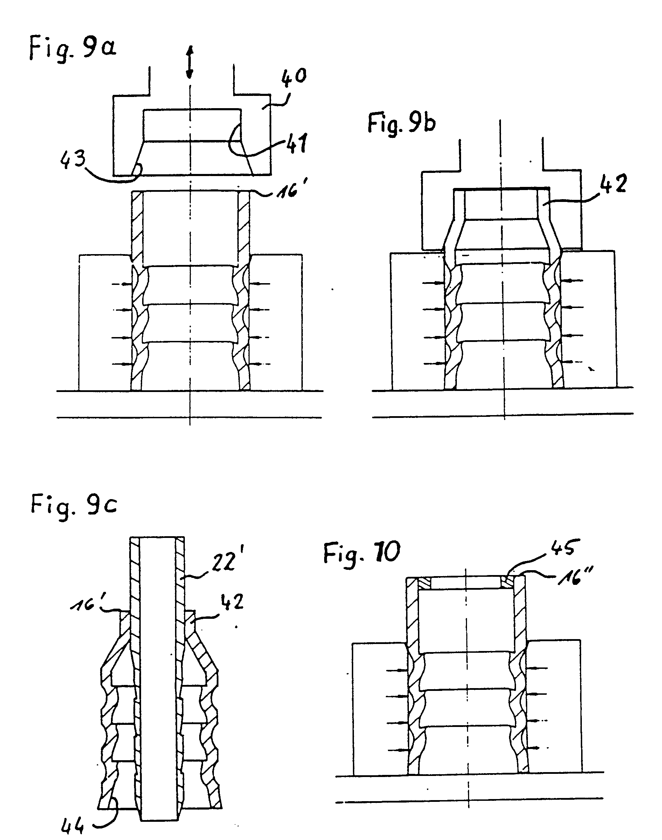

Gemäß Fig. 8 können die Sicken 9 auch mittels eines z.B. sechsteiligen Preßwerkzeuges hergestellt werden. Die Segmente 6, 7 des Preßwerkzeuges umfassen die Hülse 1 ringförmig und weisen hülsenseitig eine formgebende Kontur 5 für das Sickenpressen auf. Wie durch Pfeile dargestellt, werden die Segmente zum Sickenpressen radial nach innen verfahren (Fig. 8, linke Bildhälfte) und anschließend wieder radial nach außen verfahren (Fig. 8, rechte Bildhälfte). In axialer Richtung sind seitlich der Kontur 5 an den Segmenten 6, 7 Lagerschilde (in der Zeichnung nicht eigens dargestellt) zum flächigen Umfassen der Hülse 1 vorgesehen, an denen sich die Hülse 1 radial abstützt. Die Kontur 5 kann auch mehrfach unterbrochen sein, so daß nur eine Reihe einzelner Vertiefungen in der Hülse 1 entstehen.

Alle Segmente werden gleichzeitig gegen die Hülse 1 verfahren und pressen dabei die die Hülse umlaufenden Sicken 9. Anschließend verbleiben alle Segmente 6, 7 in der in Fig. 8 rechts dargestellten Position, während der Stempel 2 (wie in Fig. 1c/d, 2c/d und 3c/d) um einen vorbestimmten Weg nach unten verfährt und die durch die Sicke hervorgerufene innere Materialerhebung 10 von oben her entsprechend der Kontur seiner Schulter 4 zu Zähnen verformt.

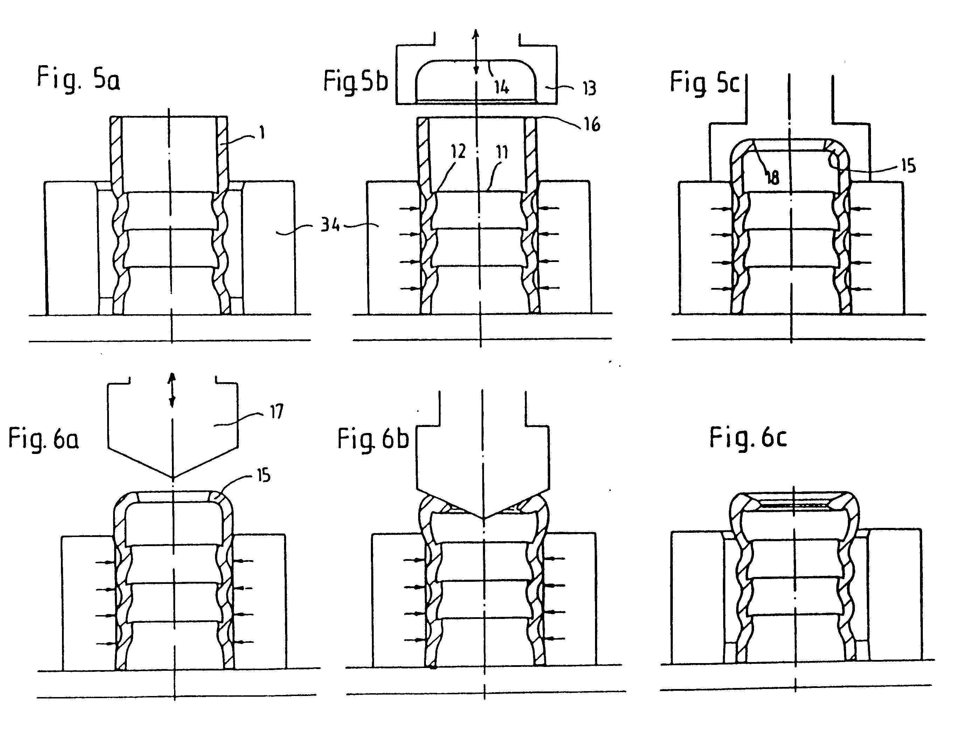

Gemäß Fig. 5a bis 5c wird eine nach innen gerichtete Ringschulter 15 dadurch angeformt, daß in einer Stempelpresse zunächst die Hülse 1 von einem Spannwerkzeug 34 radial eingespannt wird. Dann fährt ein zweiter Stempel 13 mit einer formgebenden Innenkontur 14 für die nach innen gerichtete Ringschulter 15 nach unten auf das Hülsenende 16, zu dem die Zähne 12 hinweisen. Ein in der Zeichnung nicht dargestellter konzentrischer Vorsprung in der Kontur 14 kann verhindern, daß die vorstehende Spitze 18, die sich zwangsläufig an der Hülseninnenseite der Schulter 15 ergibt, zu weit nach innen schiebt. Dieser Effekt kann auch in der in Fig. 5c dargestellten Weise verhindert werden, wonach der Stempel 13 in seiner axialen Endposition stirnseitig an dem Spannwerkzeug 34 anliegt.

Nachfolgend kann in derselben oder einer ähnlichen Stempelpresse gemäß Fig. 6a bis 6c ein dritter Stempel 17 gegen die Ringschulter 15 verfahren werden, so daß sich diese entsprechend der stirnseitigen formgebenden Kontur des Stempels 17 um einen bestimmten Winkel nach innen neigt, wodurch Axialbewegungen der Schulter 15 beim späteren Aufpressen auf einen Schlauch unterbunden werden.

Aus Fig. 7 ergibt sich die Gestalt der in einer Vorrichtung gemäß Fig. 1 bis 6 oder 8 hergestellten Schlauchpreßhülse 1 nach der Montage auf einen stahlgewebebewahrten Gummischlauch 19, dessen freies Ende auf einen Schlauchnippel 22 aufgeschoben ist. Die Endmontage einer solchen Schlaucharmatur erfolgt z.B. dadurch, daß die Schlauchpreßhülse gemäß Fig. 6c auf das freie Ende des Schlauches 19 aufgeschoben und der Nippel 22 bis zu einem Anschlag in den Schlauch 19 eingeschoben wird. Durch radiales, an sich bekanntes Verpressen der Schlauchpreßhülse 1 verringert sich deren Außenumfang, wobei die Zähne 12 sich im Material des Schlauches 19 verkrallen und die Ringschulter 15 in eine Nut 21 des Schlauchnippels 22 eingepreßt wird.

Gemäß den Fig. 9a bis 9c kann zur Herstellung einer an einem Hülsenende 16' einen zylindrischen Hülsenbereich 42 mit verringertem Innendurchmesser aufweisenden Schlauchpreßhülse ein axial verfahrbarer Stempel 40 verwendet werden, der eine dem gewünschten verringerten Hülsenaußendurchmesser entsprechende Innenkontur 41 mit einem konischen Übergangsbereich 43 aufweist. In die so (gemäß Fig. 9b) verformte Schlauchpreßhülse kann ein Schlauchnippel 22' aus glattem Rohr eingeschoben oder eingepreßt und bevorzugt an den radialen Berührungsflächen verlötet werden. Zur Einschuberleichterung für den auf den Schlauchnippel zu pressenden Schlauch ist der dem Hülsenende 16' gegenüberliegende Hülsenendbereich 44 vorzugsweise konisch aufgeweitet, während der Schlauchnipel in diesem Bereich wie üblich konisch verjüngt sein sollte.

Alternativ zu der Ringschulter gemäß Fig. 5c bis 6c kann ein Ring 45 an dem entsprechenden Hülsenende 16″ eingepreßt und bevorzugt verlötet sein.

## Bezugszeichenliste

| | | | |
|---|---|---|---|
| 1 | Hülse | 22′ | Schlauchnippel |
| | (Rohrabschnitt) | 26 | Arbeitstisch |
| 2 | Stempel (erster) | 27 | Erhöhung |
| 3 | Endbereich | 28 | Hülsenachse |
| 4 | Schulter | 29 | Stützrolle |
| 5 | Kontur | 29′ | Mantelfläche |
| 6 | Segment | 30 | Stützrolle |
| 7 | Segment | 30′ | Mantelfläche |
| 9 | Sicke | 31 | Hülsenoberfläche |
| 10 | Materialerhebung | 32 | Druckbalken |
| 11 | Kranz (Zahnring) | 33 | Sickenpreßkante |
| 12 | Zahn | 34 | Spannwerkzeug |
| 13 | Stempel (zweiter) | 35 | Richtungspfeil |
| 14 | Innenkontur | 36 | Richtungspfeil |
| 15 | Ringschulter | 37 | Richtungspfeil |
| 16 | Hülsenende | 38 | Pfeil |
| 16′ | Hülsenende | 39 | Pfeil |
| 16″ | Hülsenende | 40 | Stempel |
| 17 | Stempel (dritter) | 41 | Innenkontur |
| 18 | Spitze | 42 | Hülsenbereich |
| 19 | Gummischlauch | 43 | Übergangsbereich |
| 21 | Nut | 44 | Hülsenberich |
| 22 | Schlauchnippel | 45 | Ring |

## Patentansprüche

1. Verfahren zum Herstellen einer Schlauchpreßhülse (1) mit mindestens einem die Hülseninnenwand umlaufenden unter Verwendung eines im Hülseninneren wirkenden Stempels (2) hergestellten Kranz (11) aus einem oder mehreren nach innen vorstehenden, auf ein Hülsenende hinweisender Zahn (Zähne) (12), dadurch gekennzeichnet, daß in einen Rohrabschnitt (1) von außen eine durchgehende oder unterbrochene, eine oder mehrere innere Materialerhebung(en) (10) bildende Sicke (9) je Kranz (11) eingepreßt wird und der Stempel (2) jeweils nachfolgend die Materialerhebung(en) (10) von innen zu dem Zahn (den Zähne) (12) verformt.

2. Verfahren nach Anspruch 1, dadurch gekennzeichnet, daß
a) ein Preßwerkzeug (6, 7) die Sicke (9) preßt,
b) der Stempel (2) mit einer formgebenden Schulter (4) unter axialem Vorschub den Zahn (die Zähne) (12) formt, und darauf das Preßwerkzeug (6, 7) den Rohrabschnitt freigibt sowie der Stempel (2) und das Preßwerkzeug (6, 7) in eine benachbarte Arbeitsposition zum Herstellen eines weiteren Kranzes (11) von Zähnen (12) an demselben Rohrabschnitt verfährt.

3. Verfahren nach Anspruch 1 oder 2, dadurch gekennzeichnet, daß mehrere Rohrabschnitt in nebeneinander angeordneten Werkzeugen gleichzeitig in jeweils einer anderen axialen Position mit Zähnen (12) versehen und nachfolgend dem jeweils benachbarten Werkzeug zum Herstellen des nächsten Kranzes (11) von Zähnen (12) zugeführt werden.

4. Verfahren nach einem der Ansprüche 1 bis 3, dadurch gekennzeichnet, daß abschließend ein Ende jedes Rohrabschnittes (1) zu einer nach innen gerichteten Ringschulter (15) verpreßt wird.

5. Verfahren nach einem der Ansprüche 1 bis 3, dadurch gekennzeichnet, daß abschließend in ein Ende jedes Rohrabschnittes (1) ein Ring (45) eingepreßt wird.

6. Verfahren nach einem der Ansprüche 1 bis 3, dadurch gekennzeichnet, daß abschließend ein Ende jedes Rohrabschnittes (1) zu einem zylindrischen Hülsenbereich (42) mit verringertem Innendurchmesser verpreßt wird.

7. Vorrichtung zum Herstellen von Schlauchpreßhülsen mit mindestens einem die Hülseninnenwand umlaufenden Kranz (11) aus einem oder mehreren nach innen vorstehenden, auf ein Hülsenende hinweisenden Zahn (Zähne) (12) gekennzeichnet durch einen zu der Schlauchpreßhülse verformenden Rohrabschnitt (1) in einer Querschnittsebene völlig oder abschnittsweise umfassenden Preßwerkzeug mit mehreren radial verfahrbaren Segmenten (6, 7) einen in dem Rohrabschnitt (1) axial verfahrbaren ersten Stempel (2) mit einem etwa den inneren Querschnitt des Kranzes (11) der herzustellenden Zähne (12) aufweisenden Endbereich (3) und einer daran anschließenden Schulter (4) mit der Kontur des zu dem einen Ende (16) des Rohrabschnittes (1) hinweisenden Teiles der Zähne (12).

8. Vorrichtung nach Anspruch 7, dadurch gekennzeichnet, daß seitlich der formgebenden Kontur (5) Lagerschilde zum flächigen Umfassen des Rohrabschnittes (1) angeordnet sind.

9. Vorrichtung zum Herstellen von Schlauchpreßhülsen (1) mit mindestens einem die Hülseninnenwand umlaufenden Kranz (11) aus einem oder mehreren nach innen vorstehenden, auf ein Hülsenende hinweisenden Zahn (Zähne) (12), gekennzeichnet durch
a) einen entlang dem Umfang der Peripherie eines zu der Schlauchpreßhülse zu verformenden Rohrabschnittes (1) verfahrbaren, gegen die Oberfläche (31) des Rohrabschnittes (1) anpreßbaren, länglichen Druckbalken (32) mit einer Sickenpreßkante (33),
b) mindestens zwei als Gegenlager für den Rohrabschnitt (1) dienende Stützrollen (29, 30), deren Achse rechtwinklig zur Erstreckungsrichtung des Druckbalkens (32) verlaufen sowie
c) einen in dem Rohrabschnitt (1) axial verfahrbaren ersten Stempel (2) mit einem etwa den inneren Querschnitt des Kranzes (11) der herzustellenden Zähne (12) aufweisenden Endbereich (3) und einer daran anschließenden Schulter (4) mit der Kontur des zu dem einen Ende (16) des Rohrabschnittes (1) hinweisenden Teiles der Zähne (12).

10. Vorrichtung nach Anspruch 9, dadurch gekennzeichnet, daß die Sickenpreßkante (33) aufgerauht ist, insbesondere feine Zähne aufweist.

11. Vorrichtung nach einem der Ansprüche 7 bis 10, gekennzeichnet durch einen zweiten axial verfahrbaren Stempel (13) mit einer formgebenden Innenkontur (14) zum Herstellen einer nach innen gerichteten Ringschulter (15) an einem Ende (16) des Rohrabschnittes (1).

12. Vorrichtung nach Anspruch 11, gekennzeichnet durch einen dritten, axial verfahrbaren Stempel (17) mit kegelig geformter Stirnfläche zum Einwärtsdrücken der Ringschulter (15) in den Hülseninnenraum.

13. Vorrichtung nach einem der Ansprüche 7 bis 10, gekennzeichnet durch einen anderen axial verfahrbaren Stempel (40) mit einer formgebenden Innenkontur (41) zum Herstellen eines zylindrischen Bereiches (42) mit verringertem Innendurchmesser an einem Ende (16') des Rohrabschnittes (1).

14. Vorrichtung nach einem der Ansprüche 7 bis 13, dadurch gekennzeichnet, daß die Schulter (4) des ersten Stempels (2) einen spitzwinkligen Hinterschnitt aufweist.

15. Vorrichtung nach einem der Ansprüche 7 bis 13, dadurch gekennzeichnet, daß die Schulter (4) des ersten Stempels (2) einen Hinterschnitt mit rundem Querschnitt aufweist.

## Claims

1. A method of producing a pressed hose coupling (1) with at least one rim (11) which runs round the inner wall of the coupling and is produced using a die (2) acting in the interior of the coupling and which comprises one of more teeth (12) projecting inwards and orientated towards one end or the coupling, characterized in that a continuous or interrupted corrugation (9) forming one or more internal protuberances of material (10) are pressed into one tube section (1) per rim (11) from the outside, and the die (2) subsequently deforms the protuberance or protuberances of material (10) from the inside towards the tooth or teeth (12) in each case.

2. A method according to claim 1, characterized in that
a) a pressing tool (6, 7) presses the corrugation (9),
b) the die (2) with a shaping shoulder (4) moulds the tooth or teeth (12) with an axial thrust, and then the pressing tool (6, 7) releases the tube section and the die (2) and the pressing tool (6, 7) move into an adjacent operating position in order to produce a further rim (11) or teeth (12) on the same tube section.

3. A method according to claim 1 or 2, characterized in that a plurality of tube sections in tools arranged adjacent one another are simultaneously provided with teeth (12) in another axial position in each case and are subsequently conveyed to the respective adjacent tool in order to produce the next rim (11) of teeth (12).

4. A method according to any one of claims 1 to 3, characterized in that one end of each tube section (1) is subsequently pressed to form an inwardly orientated annular shoulder (13).

5. A method according to any one of claims 1 to 3, characterized in that a ring (4, 5) is subsequently pressed into one end of each tube section (1).

6. A method according to any one of claims 1 to 3, characterized in that one end of each tube section (1) is subsequently pressed to form a cylindrical area (42) of the coupling with a reduced internal diameter.

7. An appartus for producing pressed hose couplings with at least one rim (11) which runs round the inner wall of the coupling and which comprises one or more teeth (12) projecting inwards and orientated towards one end of the coupling, characterized by (a) pressing tool embracing completely or partly in one cross-sectional plane a tube section (1) to be deformed into the pressed hose coupling and having a plurality of radially displaceable segments (6, 7), (and) a first die (2) which is axially displaceable in the tube section (1) and which comprises an end region (3) having aproximately the internal cross-section of the rim (11) of the teeth (12) to be produced and a shoulder (4) joined to the said end region (3) with the profile of the part of the teeth (12) orientated towards one end (16) of the tube section (1).

8. An apparatus according to claim 7, characterized in that bearing plates for embracing the tube section (1) in a planar manner are arranged laterally of the shaping profile (5).

9. An apparatus for producing pressed hose couplings (1) with at least one rim (11) which runs round the inner wall of the copuling and which comprises one or more teeth (12) projecting inwards and orientated towards one end or the coupling, characterized by
a) an elongate pressure bar (32) which is displaceable along the periphery of a tube section (1) to be deformed into the pressed hose coupling and which is pressable against the surface (31) of the tube section (1) and which has a corrugation-pressing edge (33),
b) at least two support rollers (29, 30) which act as abutments for the tube section (1) and the axes of which extend rectangular to the longitudinal direction of the pressure bar (32) and
c) a first die (2) which is axially displaceable in the tube section (1) and which comprises an end region (3) having approximately the internal cross-section of the rim (11) or the teeth (12) to be produced and a shoulder joined to the said end region (3) with the profile of the part of the teeth (12) orientated towards one end (16) of the tube section (1).

10. An apparatus according to claim 9, characterized in that the corrugation-pressing edge (33) is roughened, and in particular has fine teeth.

11. An apparatus according to any one of claims 7 to 10, characterized by a second axially displaceable die (13) with a shaping internal profile (14) for producing an inwardly orientated annular shoulder (15) at one end (16) of the tube section (1).

12. An apparatus according to claim 11, characterized by a third, axially displacable die (17) with an end face shaped in a tapered manner for pressing the annular shoulder (15) into the interior of the coupling.

13. An apparatus according to any one of claims 7 to 10, characterized by another axially displaceable die (40) with a shaping internal profile (41) for producing a cylindrical area (42) with a reduced internal diameter at one end (16') of the tube section (1).

14. An apparatus according to any one of claims 7 to13, characterized in that the shoulder (4) of the first die (2) has an acute-angled undercutting.

15. An apparatus according to any one of claims 7 to 13, characterized in that the shoulder (4) of the first die (2) has undercutting with a round cross-section.

## Revendications

1. Procédé de fabrication d'une douille de serrage (1) de tuyau souple comportant au moins une couronne (11) qui s'étend sur tout le pourtour de la paroi intérieure de la douille, et réalisée au moyen d'un poinçon (2) agissant à l'intérieur de la douille et comporte une ou plusieurs dents (12) qui font saillie à l'intérieur en direction de l'une des extrémités de la douille, caractérisé en ce que, dans un segment de tube (1) et pour chaque couronne (11), une moulure (9) est réalisée par compression du matériau de manière à former une ou plusieurs saillies intérieures (10) et en ce que le poinçon (2) intervient ensuite pour déformer de l'intérieur cette ou ces saillies de matériau (10) pour réaliser la ou les dents (12).

2. Procédé selon la revendication 1, caractérisé en ce que
a) un outil de pression (6, 7) réalise la moulure (9) par compression,
b) le poinçon (2), qui comporte un épaulement de formage (4), réalise la ou les dents (17) par formage en avançant dans le sens axial, que l'outil de pression (6, 7) dégage le segment de tube et que le poinçon (2) et l'outil de pression (6, 7) se placent dans une position de travail voisine pour la réalisation d'une autre couronne (11) de dents (12) dans la même segment de tuyau.

3. Procédé selon l'une des revendications 1 ou 2, caractérisé en ce que plusieurs segments de tube sont, dans des outils situés les uns à côté des autres, munis simultanément de dents (12) dans des positions axiales qui diffèrent d'un cas à l'autre, puis amenés aux outils correspondants suivants pour la réalisation de la couronne (11) suivante de dents (12).

4. Procédé selon l'une des revendications 1 à 3, caractérisé en ce que, pour finir, l'une des extrémités de chaque segment de tube (1) est déformée par compression pour la réalisation d'un épaulement annulaire (15) dirigé vers l'intérieur.

5. Procédé selon l'une des revendications 1 à 3, caractérisé en ce que pour finir, une bague (45) est enfoncée dans l'une des extrémités de chaque segment de tube (1).

6. Procédé selon l'une des revendications 1 à 3, caractérisé en ce que, pour finir, l'une des extrémités de chaque segment de tube (1) est comprimée pour former une zone de douille cylindrique (42) de moindre diamètre.

7. Dispositif pour la fabrication de douille de serrage de tuyaux souples comportant au moins une couronne (11) qui s'étend sur tout le pourtour de la paroi intérieure de la douille et comporte une ou plusieurs dents (12) qui font saillie à l'intérieur en direction de l'une des extrémités de la douille, caractérisé par un outil de pression qui comporte plusieurs segments (6, 7) pouvant se déplacer dans le sens radial et saisit complètement ou par segments dans un plan transversal, un segment de tube (1) qui doit être transformé en douille de serrage de tuyau souple, par un premier poinçon (2) qui peut se déplacer dans le sens axial dans le segment de tube (1) comprenant une zone d'extrémité (3) ayant à peu près la section intérieure de la couronne (11) de dents (12) à réaliser et un épaulement (4), situé à la suite et ayant le contour de la partie des dents (12) qui est tournée vers l'une des extrémités (16) du segment de tube (1).

8. Dispositif selon la revendication 7, caractérisé en ce que, sur le côté du contour de formage (5), il comporte des boucliers à palier pour l'enveloppement à plat du segment de tube (1).

9. Dispositif pour la fabrication de douilles de serrage (1) de tuyaux souples comportant au moins une couronne (11) qui s'étend sur tout le pourtour de la paroi intérieure de la douille et comporte une ou plusieurs dents (12) qui font saillie à l'intérieur en direction de l'une des extrémités de la douille, caractérisé

a) par une poutre de pression (32) de forme allongée qui comporte un bord (33) de compression de moulures et peut être poussé contre la surface (31) du segment de tube (1) et qui peut se déplacer le long du pourtour d'un segment de tube (1) qui doit être transformé en douille de serrage de tuyau souple,
b) par au moins deux rouleaux d'appui (29, 30) qui servent de contre-supports pour le segment de tube (1) et dont les axes sont rectangulaire à la direction longitudinale de la poutre de pression (32) et
c) par un premier poinçon (2) qui peut se déplacer dans le sens axial dans le segment de tube (1) et qui comporte une zone d'extrémité (3) ayant à peu près la section transversale intérieure de la couronne (11) des dents (12) à réaliser et un épaulement (4) situé à la suite et ayant le contour de la partie des dents (12) qui est tournée vers l'une des extrémités (16) du segment de tube (1).

10. Dispositif selon la revendication 9, caractérisé en ce que le bord (33) de compression de moulures est rendu rugueux et comporte notamment des dents fines.

11. Dispositif selon l'une des revendications 7 à 10, caractérisé par une deuxième poinçon (13) qui peut se déplacer dans le sens axial et présente un contour intérieur de formage (14) pour la réalisation d'un épaulement annulaire (15) dirigé vers l'intérieur à l'une des extrémités (16) du segment de tube (1).

12. Dispositif selon la revendication 11, caractérisé par un troisième poinçon (17) qui peut se déplacer dans le sens axial et comporte une surface frontale conique pour l'enfoncement des épaulements annulaires (15) dans l'espace intérieur de la douille.

13. Dispositif selon l'une des revendications 7 à 10, caractérisé par un autre poinçon (40) qui peut se déplacer dans le sens axial et comporte un contour intérieur de formage (41) pour la réalisation d'une zone cylindrique (42) de moindre diamètre intérieur à l'une des extrémités (16) du segment de tube (1).

14. Dispositif selon l'une des revendications 7 à 13, caractérisé en ce que les épaulements (4) du premier poinçon (2) comportent un évidement arrière en forme d'angle aigu.

15. Dispositif selon l'une des revendications 7 à 13, caractérisé en ce que les épaulements (4) du premier poinçon (2) comportent un évidement arrière de section arrondie.

Fig. 1a     Fig 1b     Fig. 1c     Fig. 1d

Fig. 2a     Fig. 2b     Fig. 2c     Fig. 2d

EP 0 193 589 B1

Fig.3a    Fig.3b    Fig.3c    Fig.3d

Fig. 4    Fig.8    Fig.7

EP 0193589 B1

Fig. 5a

Fig. 5b

Fig. 5c

Fig. 6a

Fig. 6b

Fig. 6c

EP 0 193 589 B1

EP 0193589 B1

Fig. 9a

40
41
43
16'

Fig. 9b

42

Fig. 9c

22'
16'
42
44

Fig. 10

45
16"

17